# EUROPÄISCHE PATENTSCHRIFT

(11) **EP 4 355 628 B1**
(45) Veröffentlichungstag und Bekanntmachung des Hinweises auf die Patenterteilung: **12.06.2024**
(21) Anmeldenummer: 22773612.1
(22) Anmeldetag: 05.09.2022
(51) Int. Cl.: B60W 50/04, B60T 17/18, B60W 50/02

(54) **VERFAHREN UND SYSTEM ZUR ÜBERTRAGUNG EINER STEUERUNGSANFORDERUNG**
METHOD AND SYSTEM FOR TRANSMISSION OF A CONTROL REQUEST
PROCÉDÉ ET SYSTÈME DE TRANSMISSION D'UNE CONSIGNE DE CONTRÔLE

(43) Veröffentlichungstag der Anmeldung: 24.04.2024
(73) Patentinhaber: Cybernetics Information Base GmbH, 64653 Lorsch (DE)
(72) Erfinder: ROSS, Hans-Leo, 64653 Lorsch (DE)
(74) Vertreter: Meyer zu Bexten, Elmar
(86) Internationale Anmeldenummer: PCT/EP2022/074638
(87) Internationale Veröffentlichungsnummer: WO 2024/051914

(56) Entgegenhaltungen:
- DE-A1-102010 003 532
- DE-A1-102014 210 485
- US-A1- 2003 208 283

## Beschreibung

Die Erfindung betrifft ein Verfahren und System zur Übertragung einer Anforderung an einen Aktuator in einem Fahrzeug.

### Stand der Technik

Für die Aktuatoransteuerung im Fahrzeug ist einerseits eine korrekte und rechtzeitige Übertragung der Stellgrößen notwendig. Dies gelingt aufgrund von diversen Einflussfaktoren, wie z. B. Übertragungsfehlern, Sensorfehlern oder Manipulationen nicht immer. Für solche Fälle wurden bereits eine Vielzahl von Sicherheitssystemen und Regelmechanismen etabliert, die solche Fälle erkennen und die Verfügbarkeit und sichere Funktion des Aktuators weitestgehend sicherstellen.

Um zukünftige Mobilitätskonzepte auch automatisiert realisieren zu können, werden kybernetische Ansätze mit heutigen Sicherheitsstandards kombiniert werden müssen. Wesentliche Kennzeichen von kybernetischen Systemen sind dynamische und kaskadierte Regelkreise so wie Kommunikation über draht- und nicht-draht-gebundene Netzwerke.

Vermehrt werden Aktuatoren bzw. deren Steuergeräte als Empfänger mehrerer Datenquellen innerhalb oder außerhalb des Fahrzeugs angesehen oder verwendet, z.B. wie in einem Publish-Subscriber-Netzwerk. Dies erhöht die Anfälligkeit für Störeinflüsse zusätzlich, da z.B. die Datenquellen teilweise nicht kontrollierbar sind.

Um solche Kommunikations- oder Datenschnittstellen abzusichern, bietet zum Beispiel der AUTOSAR-Standard verschiedene Profile, um auch die Sicherheits-Anforderungen zur Funktionalen Sicherheit, Echtzeitanforderungen als auch zur Cybersicherheit sicherzustellen. Hier wird neben dem zu übertragenden Datensatz zusätzlich ein Sequenzzähler, ein Authentizitätsmerkmal (aus welcher Quelle kommt die Information), ein Zeitstempel (wann wurde die Information von ihrer Quelle erzeugt), eine Nachrichtenidentifikation, so wie Kennzeichnungen, wann der Anfang und das Ende einer Nachricht definiert ist, mit übermittelt. Um die Nachricht inklusiver aller Informationen gegen Verfälschung durch zufällige Effekte zu sichern, wird eine zyklische Redundanzprüfung (englisch "cyclic redundancy check", CRC) bzw. ein Hash über die gesamte Botschaft erzeugt, um diese durch bewusste Verfälschung durch Hacker zu schützen.

DE 10 2014 210485 A1 offenbart den Gegenstand des Oberbegriffs von Anspruch 1.

Redundante Systeme, wie sie z.B. in der DE 10 2017 218 438 A1 oder DE 10 2016 212 326 A1 beschrieben sind, können aus verschiedenen Sensordaten deren Plausibilität prüfen und versuchen bei Nichtplausibilität die wahrscheinlich richtige abzuleiten, indem weitere Kriterien aus der Umfeldsensorik zur Abschätzung herangezogen werden.

Ein Voter, der Differenzen in verschiedenen Informationen oder Messignalen in eine bestimmten Zeitintervall betrachtet, ist in DE 102018216809 beschrieben. Er blendet im Zeitraum einer Unplausibilität die falschen Ergebnisse aus.

Ein weiteres redundantes System für ein paketvermitteltes Netzwerk, wie sie inzwischen auch häufig in Fahrzeugen vorkommen, mit zwei Redundanzen, zeigt DE 10 2018 220 092 A1.

### Offenbarung der Erfindung

In den heute standardisierten Übertragungsprotokollen im Fahrzeug ist zwar die Übertragung der Information, Nachricht oder Botschaft gegen Verfälschung von innerhalb und außerhalb des Fahrzeugs abgesichert, so dass man der Quelle der Information trauen kann. Dies bedeutet jedoch nicht, dass die Information inhaltlich, bzw. technisch auch korrekt ist, da diese durch Übertragungsfehler, Fehlfunktionen oder Softwarebugs falsch oder unentdeckt verfälscht werden kann.

Das erfindungsgemäße Verfahren, bzw. System mit den Merkmalen der unabhängigen Ansprüche hat demgegenüber den Vorteil, dass die Ansteuerung von Aktuatoren in einem Fahrzeug beim Verdacht auf Fehlern zu einer sichereren und praktikableren Funktionsfähigkeit des Fahrzeugs führt.

Hierbei beinhaltet, bzw. umfasst ein System, bzw. ein Verfahren zur Übertragung einer Anforderung an einen Aktuator in einem Fahrzeug eine Nachricht einer Datenübertragung an ein Aktuatorsteuergerät des Aktuators. Diese Nachricht beinhaltet die (aktuelle) Anforderung an den Aktuator und zusätzlich einen Bezug zu einer früheren Anforderung.

Mit anderen Worten: Es wird in der Nachricht mit der Anforderung, die üblicherweise ein Sollwert ist, ein weiteres Datum mitgeliefert, das etwas beinhaltet, was aus einer früheren Anforderung, z.B. einem früheren Sollwert oder Stellwert stammt, sprich einen Bezug zu diesem hat. Der Bezug kann die frühere Anforderung selber sein, die in der aktuellen Nachricht nochmals übermittelt wird. Alternativ wird dieser Bezug aus der früheren Anforderung abgeleitet oder berechnet. Zusätzlich kann die aktuelle Anforderung/Sollwert in die Bestimmung des Bezugs einfließen.

Vorteilhafterweise kann nun anhand einer empfangenen Nachricht oder Botschaft die technische Korrektheit, die Rechtzeitigkeit der Nachricht mittels der logischen Plausibilität geprüft werden. Wesentlich ist hier, dass die Quelle der Information mindestens 2 logisch unabhängige Informationen enthält, die in dem Empfängersystem auf Basis dieser logischen Information überprüft werden kann, bevor diese zu einer Aktion am Aktuator führt oder zu weiteren Verarbeitungsprozessen verwendet werden.

Weiterhin vorteilhafterweise kann dies in nur einer einzelnen Nachricht geschehen, indem eine redundante Information über die aktuelle Anforderung mitgeliefert wird. Da auch der Bezug übermittelt wird, kann die Empfängerseite beide Informationen, ggf. mittels früherer empfangener Informationen, die bereits vorliegen, gegeneinander prüfen.

Hilfreich ist dies besonders bei Systemen, die eine hohe Latenz aufweisen, z.B. bei Regelungen über verteilte Netzwerke, die sehr aufwendige Informationsanalysen ausführen, und wo die klassische Überprüfung der Anforderung zu zusätzlichen Totzeiten in den Regelstrecken führen. Diese weitere Unsicherheit kann zu höheren Totzeiten in den Regelstrecken der realen Welt (z.B. Momentenanpassung der Straßenreibwerte beim Bremsen und Lenken, etc.) führen. In Folge reduziert sich die Regelgüte und führt zu Reaktionsverzug oder zur Überreaktion am Aktuator, sodass bei den verwendeten harten Echtzeitsystemen Unfälle die Folge sein können. Insbesondere in hochdynamischen Aktuatorsystemen kann eine einzige falsche und nicht rechtzeitige Nachricht zur Gefahr werden, wenn erst auf die korrekte Information gewartet werden muss oder im anderen Fall die falsche Information umgesetzt wird.

Die Quelle der Information kann unabhängige redundante logisch überprüfbare Information bereitstellen, die das erwartete dynamische Verhalten eindeutig spezifiziert. Somit kann auch das resultierende dynamische Verhalten des Aktuators im jeweiligen Zeitintervall zur Laufzeit des Systems zu jeder Zeit überprüft werden.

Die Nachricht wird von einer Quelle im Fahrzeug gesendet, die z.B. ein Steuergerät ist, das die Sollwerte festlegt.

Ein Aktuatorsteuergerät ist eine Entität, die veranlasst, dass ein Stellwert dem Aktuator zugeführt wird. Häufig ist dies mittels eines Mikrocontrollers und einer Ansteuerelektronik realisiert, der eine Baueinheit mit dem Aktuator bildet. Getrennte Formen, bis zu virtuell im Fahrzeug verteilter Funktionalität der Aktuatorsteuergerätesoftware auf separater Hardware sind gleichsam denkbar.

Eine Anforderung ist ein Steuerbefehl, der von einer Quelle generiert wird. Diese kann abstrakte dynamische Aspekte (schneller, langsamer, keine Veränderung) als auch konkrete Sollwerte beinhalten (Lenkwinkel, Beschleunigung, Drehmoment), die dann seitens des Aktuatorsteuergeräts in eine konkrete (elektrische) Ansteuerung des Aktuators bzw. zu einer eindeutigen Verhalten des Fahrzeugs führen (rechts oder links lenken oder weniger oder mehr lenken) umgesetzt wird.

Erfindungsgemäss umfasst das System, bzw. das Verfahren, dass der Bezug ein Änderungszustand ist, der aus einer Differenz eines Wertes der Anforderung und eines früheren Wertes der früheren Anforderung bestimmt wurde.

Vorteilhafterweise kann mit einer einfachen Rechenoperation so ein zweiter Wert als Referenzwert generiert werden. Dies geschieht in der Quelle der Nachricht.

Die Differenz ist ein Grad für die Änderung über der Zeit. So kann das Aktuatorsteuergerät z.B. bei einer gravierenden Änderung weitere Prüfungen auf Plausibilität durchführen oder einen speziellen Modus gehen, wenn bei gravierenden Änderungsanforderungen z.B. wahrscheinlicher Fehler anzunehmen sind.

Es kann eine direkte Differenz eines aktuellen Werts einer Anforderung mit einer früheren Anforderung übermittelt werden. Das Aktuatorsteuergerät kann anhand einer gespeicherten früheren Anforderung prüfen, ob die Differenz dazu plausibel ist.

Auch kann die Differenzoperation auch nur ein Teil einer umfangreicheren Berechnung des Bezugs sein.

In einer weiteren Ausführungsform umfasst das System, bzw. das Verfahren, dass der Änderungszustand ein klassierter Änderungszustand ist.

Bei kontinuierlichen Rechenumformungen wie einer Differenzbildung oder Gradientenbildung liegt auch ein kontinuierlicher Wertebereich vor. Stattdessen kann der Bezug auch diskretionäre Werte oder Stufen aufweisen, die eine abstraktere Bedeutung haben, wie: weniger, gleich, mehr, stark oder schwach.

Vorteilhafterweise kann, falls eine kontinuierliche Darstellung beispielsweise zu widersprüchlich ist, eine Klassierung in die diskretionären Werte durchgeführt werden. Eventuell ist auch die Berechnung oder Datenübertragung des Bezugs somit einfacher. Insbesondere bei Regelungen kann der Regler-Ausgang im Zeitintervall logisch überprüft werden, weil bei einem Regler nicht wie bei einem Steuerungssystem der direkte Stellbefehl an den Aktuator kommandiert wird, sondern nur die Veränderung der Regelgröße.

In einer weiteren Ausführungsform umfasst das System bzw. das Verfahren, dass das Aktuatorsteuergerät eine Prüfung auf Plausibilität der Anforderung unter Zuhilfenahme des Bezugs durchführt.

Vorteilhafterweise kann das Aktuatorsteuergerät später aus bereits einer einzelnen empfangenen Nachricht eine redundante vergleichbare Information erlangen und eine Entscheidung für sein Aktuationsverhalten ableiten. Aus dem mitübertragenen Bezug, sprich Werten der Vergangenheit, kann es feststellen, ob die aktuelle Anforderung plausibel zum Bezug ist.

Durch diesen Vergleich bzw. Plausibilisierung wird deutlich, ob der Zustand des Aktuators beibehalten werden soll oder ob er eine massive oder geringfügige Zustandsänderung eingeleitet werden muss.

In einer weiteren Ausführungsform umfasst das System bzw. das Verfahren, dass das Aktuatorsteuergerät eine zweite Nachricht empfängt, die wenigstens eine zur (ersten) Nachricht redundante Anforderung enthält und das Aktuatorsteuergerät in Abhängigkeit von der Anzahl der positiv auf Plausibilität geprüften Anforderungen einen Zustand des Aktors einstellt.

Handelt es sich wie üblich in der Sicherheitstechnik um eine redundante Datenübertragung, dann stehen sogar vier plausibilisierbare Informationen für die aktuelle Anforderung zur Verfügung, da auch die Informationen der Sollwerte, wie die Informationen der Zustandsänderung (Bezug) logisch plausibel sein müssen. Dies kann auch kreuzweise zwischen den zwei redundanten Datenübertragungen überprüft und verglichen werden.

Eine solche redundante Datenübertragung kann durch Redundanzkonzepte, wie doppelt diversitäre Übertragungsmedien, unterschiedliche Kodierung (zum Beispiel durch verschiedene Leitungswege, oder verschiedene Absicherungsmechanismen) oder unterschiedliche Berechnungsmethoden für die Anforderung, realisiert werden.

Somit kann auch mit ungewöhnlichen Einflüssen umgegangen werden, da diese als ungewöhnlich erkannt werden (es gibt Kombinatoriken, die nicht logisch sind) und zum Beispiel wird das Fahrzeug dann entsprechend degradiert (zum Beispiel abgebremst oder fährt eine andere Strecke etc.).

Verfügt man zum Beispiel über drei Algorithmen, die vergleichbare Ziele verfolgen, wie z.B. Objekterfassung, Freiflächenerfassung und optischer Fluss (Objektverfolgung), so können logische Information, ob der relevante Bereich befahrbar ist aus drei unterschiedlichen Algorithmen gewonnen werden. Diese unterschiedlichen Berechnungsmethoden mit diversitären Algorithmen ergeben auch ein redundantes System.

Vorteilhafterweise stehen so noch mehr redundante Informationen, als mit einem klassischen redundanten System zur Verfügung, sodass eine Anforderung noch besser plausibilisiert und überwacht werden kann.

Auch ist es möglich nun nur drei Informationen und nicht vier Informationen plausibel zu vergleichen. Wenn eine Information nicht plausibel ist, so kann das Aktuatorsteuergerät als Reaktion darauf die Zustandsänderung (Anforderung) auch mit geringerer Dynamik oder Intensität bereits einleiten. Folgt eine Bestätigung, z.B. durch eine folgende Nachricht, kann auch die volle Performanz für die Zustandsänderung(en) eingeleitet werden. Beispielsweise wird bei der ersten nicht vollständig plausiblen Nachricht noch mit 70% der gemäß Anforderung geforderten Bremskraft gebremst und die angeforderte Vollbremsung (100%) erst mit Erhalt der zweiten plausiblen Botschaft eingeleitet. Beim Lenksystem kann erst ein leichtes einlenken stattfinden und erst mit der zweiten Botschaft wird mit voller Performanz eingelenkt.

Weiterhin vorteilhafterweise kann so der Zustand des Aktors adaptiv zum Plausibilisierungsgrad eingestellt werden. Extreme, d.h. eher kritische, Ausschläge werden dann nur ausgeführt, wenn die Anforderung auch sicher (plausibilisiert) ist. Gleichzeitig wird die grundsätzliche Funktion der Aktuatorik auch bei schlechter Plausibilität gewährleistet.

Wenn das Aktuatorsteuergerät ein Voting-Mechanismus beinhaltet, wählt es von den vier Informationen diejenige aus, die am häufigsten identisch ist. Solange alle identisch sind, kann der Aktuator im Sinne der gesamten Anforderung angesteuert werden, bei weniger identischen Informationen abgestuft mit nur einem Teil der Anforderung, z.B. 80% bei zwei identischen Informationen. Der jeweilig am seltensten vorkommende Wert (Information) wird als fehlerhafter Wert betrachtet und verworfen.

In einer weiteren Ausführungsform umfasst das System bzw. das Verfahren, dass das Aktuatorsteuergerät die Prüfung auf Plausibilität in einem begrenzten Zeitintervall durchgeführt wird.

Da die Anforderung i.d.R. regelmäßig kommt oder in einer bestimmten Zeit ein Update dieser zu erwarten ist, hat auch der Bezug eine Zeitabhängigkeit, die überprüft werden kann. Dieses Zeitintervall kann dynamisch sein, d.h. wechselnde Dauern haben, in denen Anforderung und Bezug auch plausibel sein müssen.

Vorteilhafterweise kann durch den zeitlichen Faktor das Plausibilisierungsergebnis abhängig von den Eigenschaften des Systems weiter verbessert werden.

In einer weiteren Ausführungsform umfasst das System bzw. das Verfahren, dass die Nachricht ein Flag für die Aktivierung oder Deaktivierung eines Wartungsmodus enthält.

In einem Regler ist es schwierig, vom Ausgang des Reglers auf die Änderungen am Eingang als Führungsgröße oder als Änderung des Feedbacks zu schließen. Handelt es sich jedoch um einen eindeutigen Regler oder auch eindeutige Reglerkaskaden, so sind die Regler- beziehungsweise deren Kaskaden durch die Reglerparameter (PID) und Zeitgrößen (T) eindeutig bestimmbar. Weiterhin kann das eindeutig erwartete korrekte Verhalten des Fahrzeugs durch den Aktuator validiert werden womit auf Basis der logischen Prüfung und durch Rücklesen der Regelgröße und des Reglerverhaltens in diese logische Überprüfung eingebunden werden.

Vorteilhafterweise kann in Ergänzung zur Übertragung des Bezugs auch als spezieller Zustand ein Wartungsmodus (Maintenance-Mode) eingeführt werden, wobei zur Laufzeit die Reglerparameter verändert werden können.

Wann die Quelle diesen Modus aktiviert, kann von Umweltfaktoren abhängen, z.B. bei erkanntem schlechtem Straßenzustand oder bei eintretendem Regen.

In einer weiteren Ausführungsform umfasst das System bzw. das Verfahren, dass es eine Feedback-Schleife vom Aktuator oder Aktuatorsteuergerät zu einer Quelle der Nachricht(en) gibt, die ein Zustandsüberwacher (Observer) überwacht, der die Auswirkung der Anforderung(en) und/oder Konsistenz der Nachricht(en) prüft, wobei dieser das Aktuatorsteuergerät bei Unstimmigkeiten so beeinflusst, dass die Anforderung funktional degradiert wird.

Da Redundanzen und auch Parameter und Zustandswechsel immer eine signifikante Fehlerwahrscheinlichkeit haben, sollten solche Parametersätze und komplexen dynamischen Botschaften kontinuierlich überwacht werden. Je größer eine Nachricht ist und je häufiger der Protokollrahmen dynamische Datenänderungen zulässt, desto häufiger treten Fehler in den Protokollen bzw. in den Botschaften auf. Daher braucht man eine eindeutige Prüfinstanz, die die logische, plausible und Daten-technische Korrektheit prüft und auch eine gewisse Intelligenz hat, eine Manipulation der Informationen zu überprüfen.

Dazu hat sich zum Beispiel im VDA-Überwachungskonzept, der sogenannte Observer etabliert. Dieser arbeitet ähnlich wie ein "Predictive Health Monitoring" (PHM) in der Medizin- oder Flugindustrie. Dies ist ein dynamischer Zustandsüberwacher.

Im Gegensatz zu den etablierten PHM, wird hier vorgeschlagen, dass die Performanz degradiert wird, sobald Daten inkonsistent sind. Sprich sind die redundanten Informationen/Datensätze und auch die Zustandsinformationen oder Reglerparameter nicht konsistent, so wird die Information nicht einfach verworfen, sondern es werden funktionale Degradationen eingeleitet, die zu einer reduzierten Performanz der Aktuatorsysteme führen.

Der Observer reduziert, so zum Beispiel die Änderungsgeschwindigkeit der Bremsperformanz oder die Lenkperformanz. Parameter wie die qualitative Aussage, ob gerade aus weitergefahren werden soll oder gar nicht gelenkt werden soll, ob nicht beschleunigt oder gebremst, oder ob weiter verzögert oder beschleunigt werden soll können durch die Parameterprüfung meist eindeutig festgestellt werden, aber die Änderungsgeschwindigkeit kann durch den Observer reduziert werden.

Vorteilhafterweise bleibt das Fahrzeug eindeutig kontrollierbar, jedoch nimmt die Performanz, mit der es seine Änderungen durchführt, ab.

In einer weiteren Ausführungsform umfasst das System bzw. das Verfahren, dass der Zustandsüberwacher in festen Zeitintervallen prüft.

Solche Oberserver haben einen typischen Grundtakt, zum Beispiel erwarten Sie alle 100 Millisekunden einen Trigger-Impuls. Wird in diesem Zeitintervall kein neuer valider Datenwert geliefert, degradiert ein Observer automatisch das Zielsystem (Aktuatorsteuergerät) und initiiert zum Beispiel ein Bremsmanöver oder reduziert die Lenkdynamik im Lenkungssystem. Dieser Korridor kann auf guten Straßen mit wenig Kurven und gutem Wetter auf höhere Werte gesetzt werden, damit die Anzahl der Daten reduziert werden kann. So kann ein beliebiges Trigger-Zeitformat je nach der entsprechenden Verkehrsumgebung zum Beispiel angelegt werden.

In den neueren Sicherheitsregularien, wie von UNECE oder FMVSS publiziert, werden sogenannte Minimale Risiko Manöver gefordert, die zu einem minimaler Risiko Kondition (Condition, MRC) führen. Dies ist im Allgemeinen eine Transition von einem höheren dynamischen Zustand zu einem geringeren dynamischen Zustand führen. Solche dynamische Transition werden durch diese Safety-Observer kontrolliert und überwacht werden können.

Vorteilhafterweise werden somit unnötige Degradationen eher vermieden.

In einer weiteren Ausführungsform umfasst das System bzw. das Verfahren, dass der Zustandsüberwacher zusätzlich Umweltbedingungen heranzieht, um das Ausmaß der funktionalen Degradation zu bestimmen oder die festen Zeitintervalle zu ändern.

Temperatur, Schmutz, etc. verfälschen die Messergebnisse, Regen, Schnee, Nebel schränken die Erkennungsfähigkeit ein Elektrische Fehler und Toleranzen (Bauteilrauschen, EMV etc.) verfälschen das Ergebnis.

Vorteilhafterweise werden damit neben den technischen Unzulänglichkeiten der Sensoren und Auswertealgorithmen auch mögliche Fehlerauswirkungen aus dem Umfeld/Umwelt berücksichtigbar.

Die technischen Systeme können zeitlich variabel kalibriert oder konfiguriert werden, so dass das Aktuatorsteuergerät für einen bestimmten Zeitraum, z.B. solange die Umweltbedingung andauert, die Ergebnisse dieser technischen Elemente (Quellen) ausblendet.

Nachfolgend werden unter Bezugnahme auf die beigefügten Figuren weitere Ausführungsbeispiele näher beschrieben und erläutert.

Es zeigen:
Fig. 1 einen Protokollrahmen einer Nachricht mit Bezug zur Anforderung;
Fig. 2 eine PID-Controller Überwachung;
Fig. 3 einen dynamischen Observer mit Zustandsüberwachung;
Fig. 4 eine Verbundregelung inklusive Zustandsdatenfluss, PID-Reglerüberwachung und Observer mit Zustandsüberwachung.

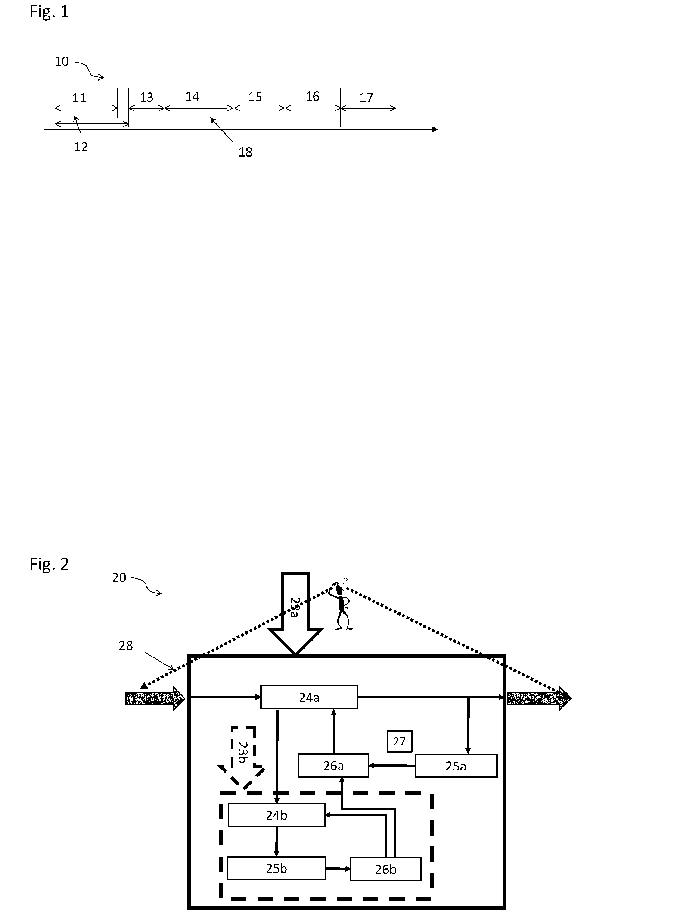

Wie in Fig. 1 gezeigt, besteht ein Protokollrahmen 10 einer Nachricht einerseits aus den klassischen Bestandteilen eines typischen Formats, die zum Beispiel zu einem Aktuatorsteuergerät in einem Fahrzeug übertragen wird: Nachrichtenidentifier 11, Arbitierungsfeld 12, Steuerfeld 13, Datenfeld 14 mit dem Nennwert (Anforderung), CRC-Segment oder Hash 15, Acknowledge-Feld 16 und dem End-of-Frame 17. Zusätzlich können diese noch ein Anfangs- und Ende-Kennzeichen (Start- und Stopp-Bit), Sequenz- oder Nachrichtenzähler und Zeitstempel beinhalten.

Das Datenfeld 14 enthält nun nicht nur die aktuelle Anforderung, sondern auch eine Ergänzung 18. Diese enthält den Bezug und dieser kann dynamische Zustandsdaten, bzw. eine dynamische Veränderung enthalten, sodass die Daten in sich auf der Empfängerseite (Aktuatorsteuergerät) auf Konsistenz, Plausibilität und logische Umsetzbarkeit geprüft werden können (Zustandsüberwachung). Sinnvoll ist es, wenn die dynamische Information und die direkte Steuerungsinformation in den Datenfelder durch einen eigenen CRC abgesichert sind, sop dass erkennbar ist, ob die dynamische Information oder die absolute Information verfälscht wurde.

In zusätzlichen redundanten Übertragungssystemen, wird auch diese Zustandsüberwachung redundant übertragen, sodass eine Kreuzüberwachung von den Zuständen und physikalischen Werten ergänzt werden kann. Dies führt zu einer signifikanten Erhöhung der Informationskonfidenz.

Beispiele für Daten innerhalb der Ergänzung sind: Nachrichtenzähler, Sequenzzähler, Zeitstempel, Zustandsinformation inklusive Maintanance-Mode (State-Flag), PID-Control-Parameter oder Observer-Trigger-Sequenz.

Anwendungsbeispiele für derartige übertragene Informationen sind Änderungszustände oder dynamische Anforderungen, wie
- Aktuator soll Zustand beibehalten (fahre mit gleichförmiger Geschwindigkeit weiter, verzögere weiter mit 3 m/s², behalte Lenkeinschlag von 50° bei, fahre geradeaus weiter etc.)
- Stelle einen Bremsdruck von x Bar ein
- Verzögerung um 30% vermindern / erhöhen
- Bremse mit 30% der maximalen Bremskraft
- Erhöhe sprunghaft auf volle Bremskraft
- Lenke plötzlich nach rechts / links mit einem Winkel oder mit einem bestimmten Moment
- Stelle einen Lenkwinkel von 100° Lenkradwinkel als Äquivalent einer Lenkradumdrehung oder entsprechende Momente oder andere Winkelvorgaben, etc.

Fig. 2 zeigt ein Beispiel für eine dynamische Übertragung von Reglerparametern 28 (PID-Controller Überwachung 20), die auch überwacht werden.

Die Eingangswerte 21 werden in zwei redundante Regelschleifen a und b eingespeist und mit Energie 23 die angeforderte Leistung (required performance work) 24 bestimmt, aus der sich die Leistungskurve bestimmen (measure performance characteristics) 25 lässt, die dann zu einer Korrekturänderung (corrective action) 26 führt. In einem der Regelschleifen wird eine Rückmeldung (Feedback) 27 ausgegeben, während sich das Ergebnis (Output) 22 aus beiden errechnet. Die Die Reglerparameter 28 sind Führungsgrößen als Reglereingang und bestehen aus den T- und PID-Parametern.

Damit die Reglerparameter 28 aber nur in einem zulässigen Zeitpunkt oder zulässigen Verkehrssituation geändert werden, muss der Regler vor der Änderung in einen Maintenance-Mode gesetzt werden.

Der Protokollrahmen 10 kann so spezifiziert werden, dass das Aktivieren des Maintenance-Mode in diesen eingearbeitet wird und im Datenfeld 14, ebenso wie der Bezug, übertragen werden kann.

Dadurch, dass diese Zahlenwerte eindeutig und nach konventionellem Übertragungsmuster mit der Zustandsänderung wieder in ein eindeutiges Regelverhalten umschalten, kann auch das Feedback 27, nur in der erwartenden Struktur zugelassen werden.

Mit Einführung des Bezugs und der Ergänzung von einem Maintenance-Mode, in dem eine Parameterumschaltung als dynamischer Umkonfigurierungszustand möglich ist, kann der Zustandswechsel sicherheitstechnisch freigegeben werden und eindeutig in seinem dynamischen Verhalten überwacht werden.

Die PID-Regelparameter und deren Überwachung 20 im Fahrzeug kann jederzeit überprüfen, ob sich die Reglerdynamik auch in einem gewissen Qualitätsrahmen bewegt, z.B. in dem sie kontinuierlich die Regelgüte bestimmt.

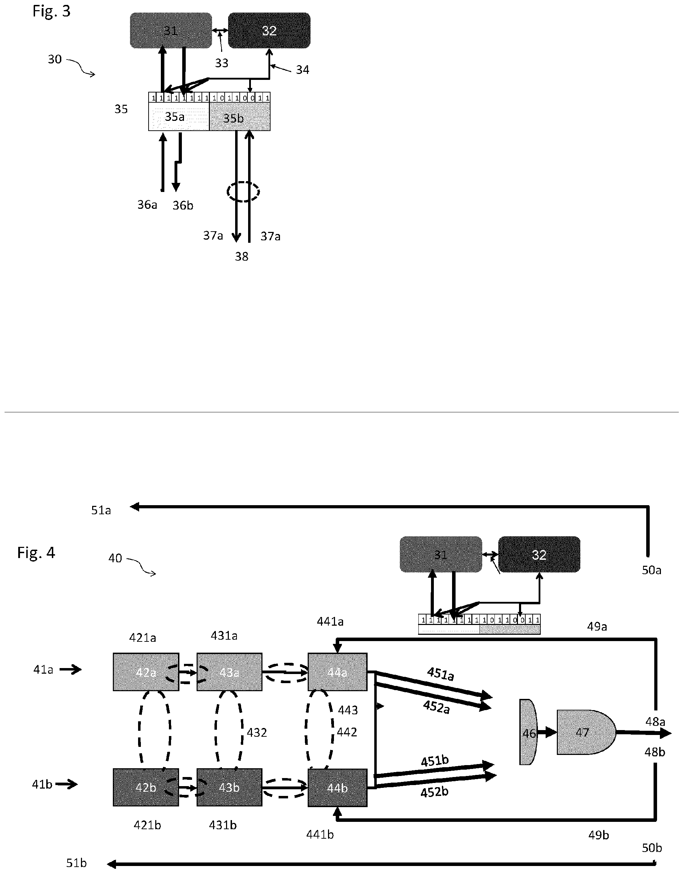

In Fig. 3 zeigt die Wirkungsweise 30 eines dynamischen Observers mit Zustandsüberwachung.

Der Observer 32 hat die Fähigkeit, jeden Zustand und jede Dateninformation auf Plausibilität, Rechtzeitigkeit, Korrektheit, Konsistenz, Fehlerfreiheit etc. zu prüfen. Im Falle festgestellter Mängel kann die Funktion oder Performanz entsprechend degradiert werden.

Der Zustandsüberwacher (Safety Observer) 32 hat eine Verbindung (diagnostic keys, synchronisation) 33 zur Anwendung (Application) 31. Nachrichten der Prüf-API (Check-API) 35 bestehen aus einem Rohwert (raw value) 35a und einem Integritäts-Schlüssel (integrity key) 35b, welche der Observer 32 gegen die Spezifikation während der Laufzeit prüft (34). Die Rohwerte 35a bestehen aus Kontrolldaten (control data) 36a und Nominaldaten (nominal data) 36b. Das Fehlerbehandlungsystem (failure Memory/failure handling) 38 bekommt Zertifikate (safety certificates) 37a im Austausch für Integritätsinformationen (Safety integrity information) 37b.

Nach dieser Methodik kann der Observer auch mit modernen Security-Mechanismen wie zum Beispiel einer dynamischen Enklave kombiniert werden. So wird dynamisch der Quelle ein Geheimnis zugespielt, welches vom Observer in dem finalen Element (üblicherweise im Aktuatorsteuergerät) kontinuierlich überwacht wird. Kann die Datenquelle das Geheimnis nicht rechtzeitig liefern, degradiert der Observer auch entsprechend die Performanz des finalen Elements (oder initiiert eine Transition zu einem akzeptablen MRC (Minimal Risk Condition).

In Fig. 4 ist eine Verbundregelung 40 inklusive Zustandsdatenfluss, PID-Reglerüberwachung und Observer mit Zustandsüberwachung gezeigt.

Von der Perzeption werden die erfassten Objekteigenschaften mit ihrem jeweiligen dynamischen Zustand zur Fahrzeug-Odometrie bis hin zur Aktuator-Steuerung 44 gesendet. In jedem Berechnungsschritt finden Kreuzüberwachungen statt, die zeitgetaktet die vier Datenflüsse (zwei Daten und zwei Zustände) nach den Sicherheitskriterien überprüfen.

Es existieren zwei redundante physikalische Systeme, die Informationen/Anforderungen bis zum Aktuatorsteuergerät tragen und Feedbackschleifen, die jeweils mit den Buchstaben a und b gekennzeichnet sind. Je ein Datenfluss (Dataflow) 41 besteht aus einem Modul zur Wahrnehmung und Missionsplanung (Perception Mission Planning) 42, welches Objekteigenschaften (Object Properties) und den Dynamischen Status (Dynamic Status) 421 bestimmt. Die Informationen werde gelangen in das Modul Trajektorienlokalisation (Trajectory Localisation) 43 in dem die Fahrzeugortung (Vehicle Odometry) und der Dynamische Status (Dynamic State) 431 bestimmt werden. Zwischen beiden Modulen 43 findet eine Sicherheitsüberprüfung (Safety Crosscheck) 432 statt.

Die Informationen gelangen in das Steuergerätemodul (Control-Unit) 44, die die Fahrzeugbewegungsdaten und den Dynamischen Status 441 bestimmen. Zwischen den Modulen 44 befindet sich der D_0-point 443 und es findet eine weitere Sicherheitsüberprüfung (Safety Crosscheck) mit Feedback 442 statt.

Die physikalischen Datenströme (Physical data streams) 451 mit den Anforderungen und den Bezügen (Status Change Information) 452 gelangen vom Steuergerät 44 zum Aktuatorsteuergerät, das einen Entscheider (Voter) 46 umfasst. Dieser kann die Plausibilisierung der vier Datenströme 451, 452 durchführen. Das Aktuatorsteuergerät steuert dann den Aktuator 47 an, der ein Kontrollkommando (Control Command) 48 aussendet.

Vom Aktuator 47 zurück zur Aktuatorsteuerung 44 gibt es Feedback-Schleifen, die ein PID-Feedback 49 übermitteln, die die erzeugte Dynamik überwachen. Die Aktuatorsteuerung 44 kann einen Soll-/Ist-Vergleich anhand der Fahrzeugbewegung (Vehicle Movement/Dynamic Status) 441 durchführen. Auf einer der beiden Feedbackschleifen wacht der Observer 32 mit der Applikation 31.

Das gesamte Fahrzeug wird durch eine große Feedback-Schleife im gesamten Verkehrskontext beobachtet, welches dem "Observer des Observer"-Prinzip entspricht. Der eingezeichnete Observer beobachtet den Gesamtzustand des gesamten Steuerflusses, er hat Einfluss auf die Performance über den Voter 47, wie auch das Aktuatorsteuergerät. Dessen Voting-Funktionen können unterschiedliche Zustände annehmen, z.B. niedrige Performanz (2oo4 - 2 von 4 Plausibel), mittlere Performanz (3oo4 - 3 von 4 Plausibel) und hohe Performanz (4oo4 - 4 von 4 Plausibel).

Die verschiedenen Performanzen können von unterschiedlichen Zuständen abhängig sein, wie z.B.:
- Betriebszuständen des Fahrzeugs (Fahrzeug beschleunigt, bremst, etc.)
- Systemzuständen (Steuergeräte sind in der Initialisierung, Re-konfiguration, Defekt, etc.)
- Verkehrssituationen (Autobahnfahrt, belebte Straße, etc.)

Das Voting kann zu unterschiedlichen Situationen am Aktuator führen: So kann eine Bremse nur mehr oder weniger bremsen, eine Lenkung kann nur gerade aus, mehr rechts, oder mehr links lenken sowie ein Antrieb kann nur mehr oder weniger beschleunigen. Das ist insbesondere bei offenen Regelkreisen der Fall, der Regler kann nur je nach den Regelparameter (Zeit, Proportional, Integral, oder Differenzial Parameter) größere oder kleinere Werte am Aktuator als Führungsgröße oder Feedback einstellen. Welche Parameter sich dynamisch in welchem Zeitintervall verändern dürfen, ist bei Mobilitätssystemen schon in der Entwicklung bekannt. Durch das Design des Aktuators 47 sind die Möglichkeiten, mit welchen Leistungsmerkmalen der Aktuator die Fahrzeugbewegung zu beeinflussen kann, limitiert. Dies lässt sich bei der Ansteuerung berücksichtigen, damit logische Informationen ergänzt werden und dass die physikalischen Limits zu den Aktuatoren in den Signalbereichen berücksichtigt werden.

Zum Beispiel ist die zulässige maximale Veränderung in den verschiedenen Fahrsituationen an sich bekannt, dies gilt auch für die maximalen zulässigen bzw. physikalisch möglichen Parameter für eine Lenkung. Diese lässt sich als Schwelle während der Entwicklung im Aktuatorsteuergerät programmieren, aber diese Schwellen sind je nach Fahrsituation, Fahrbahnzustand, aktueller Fahrzeuggeschwindigkeit unterschiedlich und daher dynamisch.

## Patentansprüche

1. Verfahren zur Übertragung einer Anforderung an einen Aktuator (47) in einem Fahrzeug mittels einer Nachricht (451) einer Datenübertragung an ein Aktuatorsteuergerät des Aktuators,
wobei die Nachricht die Anforderung beinhaltetund zusätzlich einen Bezug (452) zu einer früheren Anforderung enthält, **dadurch gekennzeichnet, dass**
der Bezug (452) ein Änderungszustand ist, der aus einer Differenz eines Wertes der Anforderung und eines früheren Wertes der früheren Anforderung bestimmt wurde.

2. Verfahren nach Anspruch 1, **dadurch gekennzeichnet, dass** der Änderungszustand ein klassierter Änderungszustand ist.

3. Verfahren nach einem der vorigen Ansprüche, **dadurch gekennzeichnet, dass**
das Aktuatorsteuergerät eine Prüfung auf Plausibilität der Anforderung unter Zuhilfenahme des Bezugs (452) durchführt.

4. Verfahren nach Anspruch 3, **dadurch gekennzeichnet, dass** das Aktuatorsteuergerät eine zweite Nachricht (451b) empfängt, die wenigstens eine zur (ersten) Nachricht (451a) redundante Anforderung enthält und
das Aktuatorsteuergerät in Abhängigkeit von der Anzahl der positiv auf Plausibilität geprüften Anforderungen einen Zustand des Aktuators einstellt.

5. Verfahren nach einem der Ansprüche 3 oder 4, **dadurch gekennzeichnet, dass**
das Aktuatorsteuergerät die Prüfung auf Plausibilität in einem begrenzten Zeitintervall durchgeführt wird.

6. Verfahren nach einem der vorigen Ansprüche, **dadurch gekennzeichnet, dass**
die Nachricht ein Flag für die Aktivierung oder Deaktivierung eines Wartungsmodus enthält.

7. Verfahren nach einem der vorigen Ansprüche, **dadurch gekennzeichnet, dass**
es eine Feedback-Schleife vom Aktuator (47) oder Aktuatorsteuergerät zu einer Quelle der Nachricht(en) (44) gibt, die ein Zustandsüberwacher (Observer) (32) überwacht, der die Auswirkung der Anforderung(en) und/oder Konsistenz der Nachricht(en) prüft,
wobei dieser das Aktuatorsteuergerät bei Unstimmigkeiten so beeinflusst, dass die Anforderung funktional degradiert wird.

8. Verfahren nach Anspruch 7, **dadurch gekennzeichnet, dass** der Zustandsüberwacher (32) in festen Zeitintervallen prüft.

9. Verfahren nach Anspruch 7 oder 8, **dadurch gekennzeichnet, dass**
der Zustandsüberwacher (32) zusätzlich Umweltbedingungen heranzieht, um das Ausmaß der funktionalen Degradation zu bestimmen oder die festen Zeitintervalle zu ändern.

10. System zur Übertragung einer Anforderung an einen Aktuator in einem Fahrzeug,
mit einem Aktuator (47) und einem Aktuatorsteuergerät, ausgebildet zur Durchführung des Verfahrens nach Anspruch 1 bis 6.

11. System gemäß Anspruch 10, **dadurch gekennzeichnet, dass** ein Zustandsüberwacher (32) ausgebildet ist zur Durchführung des Verfahrens nach Anspruch 7 bis 9.

## Claims

1. Method for transmitting a request to an actuator (47) in a vehicle by means of a message (451) of a data transmission to an actuator control unit of the actuator, wherein the message contains the request and additionally contains a reference (452) to a previous request, **characterized in that**
the reference (452) is a change state determined from a difference of a value of the request and a previous value of the previous request.

2. Method according to claim 1, **characterized in that**
the change state is a classified change state.

3. Method according to any of the preceding claims, **characterized in that**
the actuator control unit performs a plausibility check of the request with the aid of the reference (452).

4. Method according to claim 3, **characterized in that**
the actuator control unit receives a second message (451b) which contains at least one request which is redundant to the (first) message (451a), and
the actuator control unit sets a state of the actuator depending on the number of requests that have been positively checked for plausibility.

5. Method according to one of claims 3 or 4, **characterized in that**
the actuator control unit carries out the plausibility check in a limited time interval.

6. Method according to one of the preceding claims, **characterized in that** the message contains a flag for activating or deactivating a maintenance mode.

7. Method according to any one of the preceding claims, **characterized in that** there is a feedback loop from the actuator (47) or actuator controller to a source of the message(s) (44), which is monitored by an observer (32) that checks the effect of the request(s) and/or consistency of the message(s),
wherein the observer influences the actuator control unit in the event of inconsistencies in such a way that the request is functionally degraded.

8. Method according to claim 7, **characterized in that**
the status monitor (32) checks at fixed time intervals.

9. Method according to claim 7 or 8, **characterized in that**
the condition monitor (32) additionally uses environmental conditions to determine the extent of the functional degradation or to change the fixed time intervals.

10. System for transmitting a request to an actuator in a vehicle,
comprising an actuator (47) and an actuator control unit, adapted to perform the method according to claim 1 to 6.

11. System according to claim 10, **characterized in that**
a status monitor (32) is designed to carry out the method according to claims 7 to 9.

## Revendications

1. Procédé de transmission d'une demande à un actionneur (47) dans un véhicule au moyen d'un message (451) de transmission de données à un dispositif de commande d'actionneur de l'actionneur,
le message contenant la demande et contenant en outre une référence (452) à une demande antérieure, **caractérisé en ce que**
la référence (452) est un état de changement déterminé à partir d'une différence entre une valeur de la demande et une valeur antérieure de la demande antérieure.

2. Procédé selon la revendication 1, **caractérisé en ce que**
l'état de changement est un état de changement classé.

3. Procédé selon l'une des revendications précédentes, **caractérisé en ce que** l'appareil de commande de l'actionneur effectue un contrôle de plausibilité de la demande à l'aide de la référence (452).

4. Procédé selon la revendication 3, **caractérisé en ce que**
l'appareil de commande d'actionneur reçoit un deuxième message (451b) qui contient au moins une demande redondante par rapport au (premier) message (451a) et l'appareil de commande de l'actionneur règle un état de l'actionneur en fonction du nombre de demandes dont la plausibilité a été vérifiée positivement.

5. Procédé selon l'une des revendications 3 ou 4, **caractérisé en ce que** l'appareil de commande de l'actionneur effectue le contrôle de plausibilité dans un intervalle de temps limité.

6. Procédé selon l'une des revendications précédentes, **caractérisé en ce que** le message contient un drapeau pour l'activation ou la désactivation d'un mode de maintenance.

7. Procédé selon l'une des revendications précédentes, **caractérisé en ce que**
il existe une boucle de rétroaction de l'actionneur (47) ou du contrôleur d'actionneur vers une source du ou des messages (44) surveillée par un observateur (32) qui vérifie l'effet de la ou des demandes et/ou la cohérence du ou des messages,
ce dernier influençant le dispositif de commande de l'actionneur en cas d'incohérence de manière à dégrader fonctionnellement la demande.

8. Procédé selon la revendication 7, **caractérisé en ce que**
le contrôleur d'état (32) vérifie à des intervalles de temps fixes.

9. Procédé selon la revendication 7 ou 8, **caractérisé en ce que**
le contrôleur d'état (32) utilise en outre des conditions environnementales pour déterminer le degré de dégradation fonctionnelle ou pour modifier les intervalles de temps fixes.

10. Système de transmission d'une demande à un actionneur dans un véhicule, comprenant un actionneur (47) et un appareil de commande d'actionneur, conçu pour mettre en oeuvre le procédé selon les revendications 1 à 6.

11. Système selon la revendication 10, **caractérisé en ce que**
un contrôleur d'état (32) est configuré pour mettre en oeuvre le procédé selon les revendications 7 à 9.
